# FASCICULE DE BREVET EUROPEEN

(11) **EP 4 566 890 B1**
(45) Date de publication et mention de la délivrance du brevet: **17.06.2026**
(21) Numéro de dépôt: 24212740.5
(22) Date de dépôt: 13.11.2024
(51) Int. Cl.: B60R 11/02

(54) **DISPOSITIF DE MONTAGE D'UN SUPPORT DE SMARTPHONE DANS UN VEHICULE AUTOMOBILE**
VORRICHTUNG ZUR MONTAGE EINES SMARTPHONE-TRÄGERS IN EINEM KRAFTFAHRZEUG
DEVICE FOR MOUNTING A SMARTPHONE HOLDER IN A MOTOR VEHICLE

(30) Priorité: 06.12.2023 FR 2313647
(43) Date de publication de la demande: 11.06.2025
(73) Titulaire: Stellantis Auto SAS, 78300 Poissy (FR)
(72) Inventeur: HERMEN, Frédéric, 25200 Montbeliard (FR)
(74) Mandataire: BCIP

(56) Documents cités:
- EP-A1- 1 334 877
- EP-A1- 2 000 364
- CN-A- 110 481 447
- CN-A- 111 196 221
- DE-U1- 202009 003 860
- US-A1- 2014 268 509

## Description

L'invention concerne, de façon générale, le domaine de l'installation des smartphones dans l'habitacle des véhicules automobiles et s'intéresse, plus particulièrement, à un dispositif apte et destiné au montage réversible d'un support de smartphone sur le poste de conduite ou la planche de bord.

Généralement, les supports d'appareils mobiles de communication (téléphones, smartphones, tablettes, ...) destinés aux véhicules automobile sont constitués d'une console de réception de l'appareil pourvue d'organes réglables de maintien de cet appareil et de moyens de fixation sur la planche de bord.

Actuellement, ces moyens de fixation comprennent une tige filetée s'étendant à l'arrière de la console et portant un ressort associé à un écrou. Ces moyens sont destinés à coopérer par vissage avec un ensemble complexe intégré dans le poste de conduite ou la planche de bord et qui comprend plusieurs éléments et, notamment, une platine portant un conduit de réception et de verrouillage de la tige de la console. Cette platine est destinée à être coiffée, en partie supérieure par des capots et habillée, en façade, par une garniture frontale.

De manière traditionnelle, les opérations de montage du support de smartphone sur le véhicule procèdent des opérations suivantes. La première opération consiste à assembler la console et la platine en enfonçant la tige filetée dans le conduit puis à serrer l'écrou de verrouillage pour former un ensemble solidaire.

Parallèlement, il est nécessaire de préparer un logement dans la planche de bord en disposant, dans une cavité qui y est préalablement réalisée, des éléments de réception de la platine du sous-ensemble. Cet ensemble est ensuite fixé dans la planche de bord, via la platine, avant de procéder à l'habillage final en posant les capots et garnitures.

Or, il s'avère que ces conditions opératoires sont longues et laborieuses. En effet, la présence encombrante de la console solidaire de la platine dans l'environnement de la zone d'implantation sur le poste de conduite gêne les opérateurs pendant toutes les phases de fixation et d'habillage et, en conséquence, ralentit les opérations de montage.

Au surplus, cette configuration présente des risques d'accrochage et donc de casse de la console ou, tout au moins, de rupture de la liaison entre cette console et la platine.

Par ailleurs, la liaison mécanique actuelle entre la console et la platine, qui est complexe et se trouve dans le poste de conduite, est donc très difficilement accessible. Cette liaison ne permet donc pas un démontage rapide de l'ensemble, ni un remplacement aisé de la console en cas de maintenance en après-vente ou en vue d'une adaptation à un nouvel appareil .

Il existe déjà des moyens de support dans des véhicules automobiles d'appareils de communication tel qu'un smartphone, comme ceux décrits dans le brevet US10640053B2. Cependant, ces supports ne présentent ni une architecture permettant un montage simple et ergonomique et une intégration esthétique dans le poste de conduite ou la planche de bord, ni des possibilités de démontage et de remplacement faciles de la console en après-vente.

Le document US2014268509A1 montre un dispositif de montage d'un support de smartphone sur une planche de bord de véhicule automobile selon le préambule de la revendication 1.

Dans ce contexte, l'invention a cherché une solution technique destinée à résoudre les problèmes soulevés par le montage des moyens de support antérieurs et, permettant, notamment, de réduire les temps de montage de ces supports en usine tout en préservant leur intégrité et de simplifier les opérations de dépose à des fins de maintenance.

Ce but est atteint, selon l'invention, au moyen d'un dispositif de montage d'un support de smartphone sur une planche de bord de véhicule automobile, ledit support comprenant, d'une part, une console dont la paroi frontale délimite un logement pour le smartphone et dont la paroi dorsale porte une tige pourvue d'éléments de liaison et de verrouillage et, d'autre part, une platine venant s'intégrer dans la planche de bord et présentant un conduit dans lequel est introduit et verrouillée ladite tige, caractérisé en ce que lesdits éléments de liaison et de verrouillage comprennent un embout de section parallélépipédique emmanché sur ladite tige et portant des ailettes flexibles coopérant avec des ergots s'étendant radialement sur la paroi interne du conduit de la platine pour assurer l'encliquetage réversible de la tige.

Selon une caractéristique avantageuse du dispositif de montage selon l'invention, la paroi du conduit présente une section interne parallélépipédique au travers de laquelle sont ménagées des orifices destinées à recevoir les ailettes après encliquetage.

Selon une variante spécifique de réalisation du dispositif de l'invention, la tige porte, à son extrémité, un ressort hélicoïdal et un écrou destinés au calage de l'embout dans le conduit.

Selon une autre caractéristique du dispositif de montage de l'invention, l'embout comprend une collerette destinée à coulisser au contact de la paroi interne du conduit lors de l'introduction de la tige.

De préférence, cette collerette s'étend radialement sur l'embout entre son extrémité avant et les ailettes.

Selon une caractéristique spécifique du dispositif de l'invention, la collerette est réalisée, au moins partiellement, avec un matériau élastomère assurant un effet amortisseur lors de l'encliquetage.

Selon encore une autre caractéristique du dispositif de montage de l'invention, l'extrémité arrière de l'embout porte des tenons de guidage logés de manière coulissante dans des rainures de profil complémentaire ménagées sur la paroi interne de l'extrémité arrière du conduit.

Un autre objet de l'invention est un procédé de montage d'un support de smartphone sur une planche de bord de véhicule automobile au moyen du dispositif défini ci-dessus, caractérisé en ce qu'on installe préalablement la platine dans la planche de bord et on la muni d'éléments de garnissage, parallèlement on emmanche ledit embout sur la tige de la console puis on l'introduit dans le conduit de la platine jusqu'à réaliser en fin de course son verrouillage par encliquetage.

Un autre objet de l'invention est un procédé de démontage d'un support de smartphone monté sur une planche de bord de véhicule automobile via le procédé défini ci-dessus, caractérisé en ce qu'on sépare au moins l'un des éléments de garnissage pour accéder à la platine puis on appuie sur les ailettes de l'embout pour déverrouiller la tige et l'extraire du conduit par traction sur la console.

Encore un autre objet de l'invention est un véhicule automobile équipé d'un dispositif de montage d'un smartphone tel que défini ci-dessus.

Dans son aspect le plus général, l'invention propose un dispositif et un procédé apportant une solution technique perfectionnée aux problématiques du montage et du démontage d'un support de smartphone pour véhicules.

Grâce au dispositif de l'invention, le montage de ce support peut être réalisé en fin de ligne en usine ou en concession avant la livraison du véhicule et permet un démontage aisé en après-vente.

Grâce au dispositif de l'invention, les garnitures environnantes sont inchangées et leur montage, et notamment, celui de la façade centrale inférieure de la planche de bord, devient plus simple. En effet, du fait de l'absence de la console du support de smartphone lors de cette opération (console qui était auparavant gênante pour l'opérateur), la fixation de cette façade peut désormais être exécutée en un seul geste par l'opérateur. En outre, les risques de casse du support de smartphone sont ainsi évités. Par conséquent, il résulte in fine de ces avantages un gain économique substantiel.

L'embout rapporté sur la tige de la console qui est un élément essentiel de l'invention, permet d'assurer un verrouillage aisé, rapide et réversible du support de smartphone dans la platine par simple translation de la tige. Le déverrouillage est aisé car les ailettes sont visibles au travers des orifices de l'embout, une fois le capot détaché.

Par ailleurs, du fait que la platine a été intégrée dans la planche de bord ou le poste de conduite préalablement au montage de la console du support, il devient possible d'installer une planche de bord pré-assemblée dans l'habitacle tandis que sur un poste distinct on prépare le support en emmanchant l'embout sur la tige, ce qui améliore les temps de montage et la qualité de la finition.

D'autres caractéristiques et avantages de l'invention ressortiront à la lecture de la description qui va suivre, en référence aux figures annexées, pour lesquelles :
[Fig. 1] est une vue en perspective d'un support de smartphone équipé d'un mode de réalisation préférentiel du dispositif de montage de l'invention.
[Fig. 2] est une vue de l'arrière du support de smartphone de la figure 1.
[Fig. 3] est une vue de dessus du support de smartphone de la figure 1 en position de montage et de verrouillage sur une planche de bord de véhicule automobile.
[Fig. 4] est une vue en perspective de l'embout intégré au dispositif de montage selon l'invention (sans support de smartphone).
[Fig. 5] est une vue de face d'une planche de bord pourvue d'une platine du dispositif de montage selon l'invention, avant assemblage de la console du support de smartphone.
[Fig. 6] est une vue de face de la planche de bord de la figure 5 après assemblage et verrouillage de la console du support de smartphone.

Pour plus de clarté, les éléments identiques ou similaires sont repérés par des signes de référence identiques sur l'ensemble des figures.

Naturellement, le mode de réalisation du dispositif de montage de l'invention illustré schématiquement par les figures présentées ci-dessus et décrites ci-après, n'est donné qu'à titre d'exemples non limitatifs. Il est explicitement prévu dans le cadre de l'invention que l'on puisse proposer et combiner entre eux différents modes pour en proposer d'autres.

L'invention concerne le domaine général de l'installation d'un support de smartphone sur la planche de bord ou le poste de conduite d'un véhicule automobile.

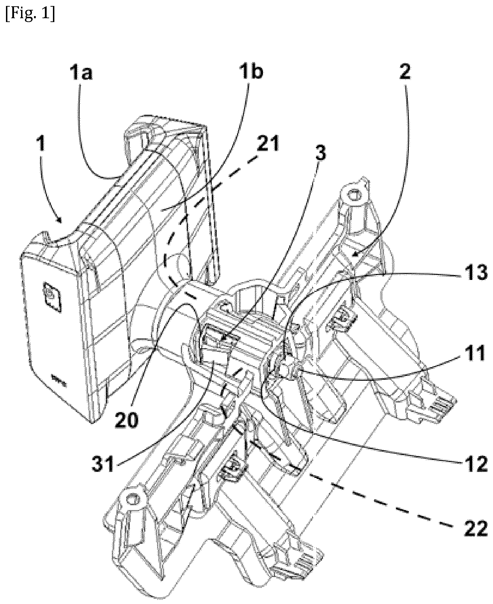

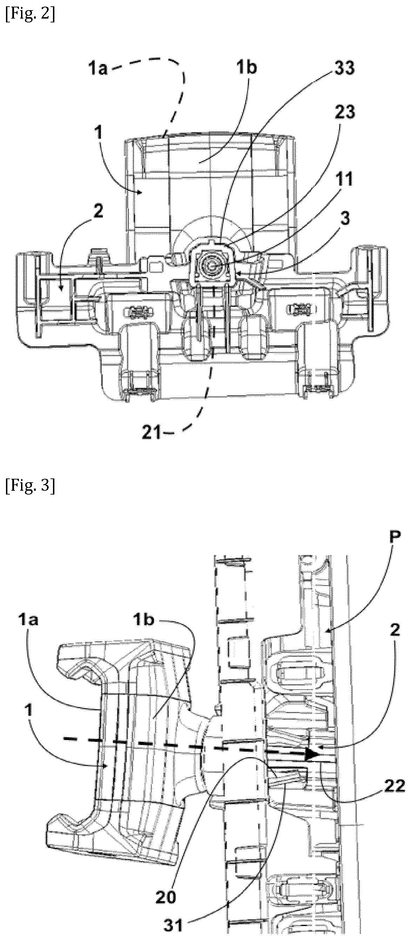

De manière traditionnelle et comme illustré par la figure 1, les supports de smartphone (l'appareil n'est pas représenté) sont des ensembles complexes comprenant généralement l'assemblage de deux éléments principaux. Un premier élément est formé d'une console 1 dont la paroi frontale 1a délimite un logement 10 pour le smartphone et dont la paroi dorsale 1b porte une tige 11 pourvue d'éléments de liaison et de verrouillage. Un second élément est formé d'une platine 2 venant s'intégrer dans la planche de bord P (figure 3) et présentant un conduit 21 dans lequel est introduit et verrouillée la tige 11 en fin de montage.

Les opérations de montage du support de smartphone sur le véhicule procèdent consiste à assembler la console 1 et la platine 2 en enfonçant la tige filetée 11 dans le conduit 21 puis à verrouiller ces deux éléments pour former un ensemble solidaire.

Parallèlement, il est nécessaire de préparer un logement dans la planche de bord en disposant, dans une cavité qui y est préalablement réalisée, des éléments de réception de la platine. L'ensemble est ensuite fixé dans la planche de bord P avant de procéder à l'habillage final en posant les capots C et garnitures dans l'environnement de la platine 2.

Il s'avère toutefois que lors du montage de l'ensemble, la console 1 qui est solidaire de la platine 2 et qui s'étend à l'avant de la planche de bord P, gêne les opérateurs pendant toutes les phases de fixation et d'habillage et, en conséquence, ralentit les opérations de montage. En outre, lors de ces opérations il existe des risques de casse de la console 1 ou, tout au moins, de rupture de la liaison entre cette console et la platine 2.

Par ailleurs, la liaison actuelle entre la console 1 et la platine 2, qui se trouve quant à elle totalement intégrée dans le poste de conduite P, ne permet pas un démontage rapide de l'ensemble, ni un remplacement aisé de la console 1 en cas de maintenance en après-vente ou en vue d'une adaptation à un nouvel appareil.

Dans ce contexte, l'invention vise à simplifier et donc à faciliter le montage et le démontage du support de smartphone, en particulier, en modifiant et en perfectionnant la liaison mécanique entre la console 1 et la platine 2.

Dans cet objectif et comme illustré par les figures 1 à 4, les éléments de liaison et de verrouillage comprennent un embout 3 de section parallélépipédique rapporté et emmanché sans jeu sur la tige 11 et portant des ailettes flexibles 31. Ces ailettes sont destinées à coopérer avec des ergots 22 s'étendant radialement sur la paroi interne du conduit 21 de la platine 2 pour assurer l'encliquetage réversible de la tige 11.

La paroi du conduit 21 de la platine 2 présente une section interne parallélépipédique au travers de laquelle sont ménagées des orifices 20 destinées à recevoir les ailettes 31 après encliquetage. De préférence, la tige 11 porte, à son extrémité, un ressort hélicoïdal 12 et un écrou 13 destinés au calage de l'embout 3 dans le conduit 21.

Le ressort 12 et l'écrou 13 et, le cas échéant, une rondelle d'appoint, assurent ainsi l'interface avec l'embout 3. Ainsi, le fournisseur du support de smartphone pourra garantir le couple de serrage et les efforts de manipulation par l'utilisateur du véhicule.

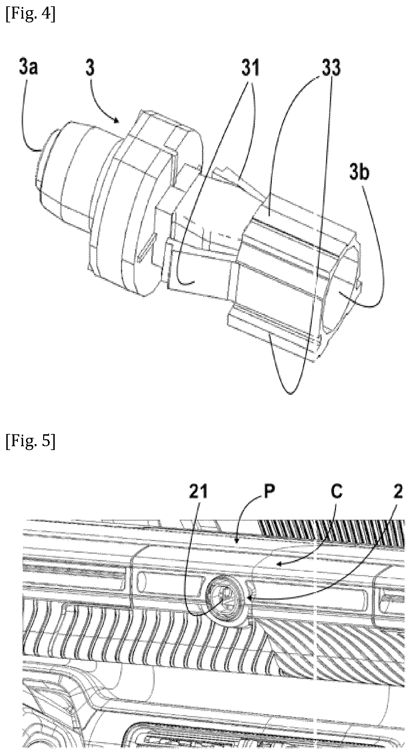

Comme illustré par la figure 4, l'embout 3 comprend une collerette 32 qui s'étend radialement sur l'embout entre son extrémité avant 3a et les ailettes 31 et qui est destinée à coulisser au contact de la paroi interne du conduit 21 lors de l'introduction de la tige 11. Cette collerette est réalisée, au moins partiellement, avec un matériau élastomère assurant un effet amortisseur au contact d'un épaulement (non représenté) du conduit 21 lors de l'encliquetage et qui maintient, en toutes circonstances, une contrainte sur les ailettes 31 de verrouillage.

Afin de parfaire la liaison entre la console 1 et la platine 2 du support de smartphone, l'extrémité arrière de l'embout 3 porte des tenons 33 de guidage venant se loger de manière coulissante dans des rainures 23 de profil complémentaire ménagées sur la paroi interne de l'extrémité arrière du conduit 21. On obtient ainsi une zone d'iso-statisme avec une fonction *Poka-Yoke* entre l'embout 3 (et donc la tige 11) et la platine 2. La paroi interne de l'embout 3 est cylindrique de son extrémité avant 3a à son extrémité arrière 3b et épouse la tige 11.

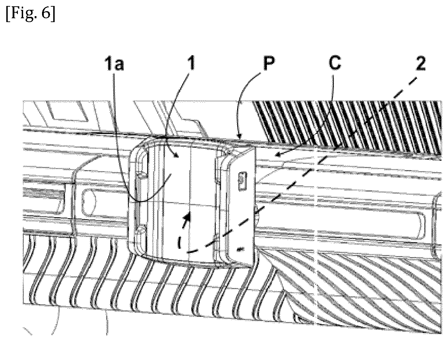

Le procédé de montage du support de smartphone sur la planche de bord P, ou le poste de conduite, est effectué au moyen du dispositif de l'invention de la manière décrite ci-après en référence aux figures 5 et 6.

Tout d'abord, un opérateur positionne et fixe la platine 2 dans la planche de bord P où elle est alors munie des éléments de garnissage traditionnels, tels que divers capots C et garnitures de façade. Parallèlement et éventuellement de façon indépendante (par exemple, chez le fournisseur du support), on emmanche l'embout 3 sur la tige 11 de la console 1 puis on introduit l'ensemble dans le conduit 21 de la platine 2 jusqu'à réaliser, en fin de course de translation (selon la flèche figure 3), son verrouillage par une déformation élastique des ailettes 31 flexibles au contact des ergots 22 de la platine 2 puis leur encliquetage dans les orifices 20 en regard.

Une fois monté, le support de smartphone peut être aisément démonté. A cet effet, l'utilisateur du véhicule, ou un opérateur de maintenance, sépare d'abord au moins l'un des capots C pour accéder à la platine 2. Les ailettes 31 sont alors visibles au travers des orifices 20 de l'embout 2, une fois le capot C détaché.

Puis, par appui sur les ailettes 31 de l'embout 3, via les orifices 20, on déverrouille la tige 11 et on l'extrait du conduit 21 par traction de la console 1 vers l'extérieur. Il est ensuite possible de reposer le capot C sur la platine 2 dans l'attente d'une nouvelle console. Par suite, il n'est plus nécessaire de démonter toute la partie centrale de la planche de bord ou du poste de conduite pour enlever la console 1.

## Revendications

1. Dispositif de montage d'un support de smartphone sur une planche de bord (P) de véhicule automobile, ledit support comprenant, d'une part, une console (1) dont la paroi frontale (1a) délimite un logement pour le smartphone et dont la paroi dorsale (1b) porte une tige (11) pourvue d'éléments de liaison et de verrouillage et, d'autre part, une platine (2) venant s'intégrer dans la planche de bord et présentant un conduit (21) dans lequel est introduit et verrouillée ladite tige, **caractérisé en ce que** lesdits éléments de liaison et de verrouillage comprennent un embout (3) de section parallélépipédique emmanché sur ladite tige (11) et portant des ailettes (31) flexibles coopérant avec des ergots (22) s'étendant radialement sur la paroi interne du conduit (21) de la platine (2) pour assurer l'encliquetage réversible de la tige (11).

2. Dispositif selon la revendication 1, **caractérisé en ce que** la paroi dudit conduit (21) présente une section interne parallélépipédique au travers de laquelle sont ménagées des orifices (20) destinées à recevoir les ailettes (31) après encliquetage.

3. Dispositif selon l'une des revendications précédentes, **caractérisé en ce que** ladite tige (11) porte, à son extrémité, un ressort hélicoïdal (12) et un écrou (13) destinés au calage de l'embout (3) dans le conduit (21).

4. Dispositif selon l'une des revendications précédentes, **caractérisé en ce que** ledit embout (3) comprend une collerette (32) destinée à coulisser au contact de la paroi interne du conduit (21) lors de l'introduction de la tige (11).

5. Dispositif selon la revendication précédente, **caractérisé en ce que** ladite collerette (32) s'étend radialement sur l'embout (3) entre son extrémité avant et les ailettes (31).

6. Dispositif selon la revendication 4 ou 5, **caractérisé en ce que** ladite collerette (32) est réalisée, au moins partiellement, avec un matériau élastomère assurant un effet amortisseur lors de l'encliquetage.

7. Dispositif selon l'une des revendications précédentes, **caractérisé en ce que** l'extrémité arrière de l'embout (3) porte des tenons (33) de guidage logés de manière coulissante dans des rainures (23) de profil complémentaire ménagées sur la paroi interne de l'extrémité arrière du conduit (21).

8. Procédé de montage d'un support de smartphone sur une planche de bord de véhicule automobile au moyen du dispositif selon l'une des revendications précédentes, **caractérisé en ce qu'**on installe préalablement la platine (2) dans la planche de bord (P) et on la muni d'éléments de garnissage, parallèlement on emmanche ledit embout (3) sur la tige (11) de la console (1) puis on l'introduit dans le conduit (21) de la platine jusqu'à réaliser en fin de course son verrouillage par encliquetage.

9. Procédé de démontage d'un support de smartphone monté sur une planche de bord (P) de véhicule automobile via le procédé selon la revendication précédente, **caractérisé en ce qu'**on sépare au moins l'un des éléments de garnissage pour accéder à la platine (2) puis on appuie sur les ailettes (31) de l'embout (3) pour déverrouiller la tige (11) et l'extraire du conduit (21) par traction sur la console (1).

10. Véhicule automobile équipé d'un dispositif de montage d'un smartphone selon l'une des revendications 1 à 7.

## Patentansprüche

1. Vorrichtung zur Montage eines Smartphone-Trägers auf einem Armaturenbrett (P) eines Kraftfahrzeugs, wobei der Träger einerseits eine Konsole (1) umfasst, deren Vorderwand (1a) eine Aufnahme für das Smartphone begrenzt und deren Rückwand (1b) einen Schaft (11) trägt, der mit Verbindungs- und Verriegelungselementen versehen ist, und andererseits eine Platine (2), die in das Armaturenbrett integriert ist und einen Kanal (21) aufweist, in den der Schaft eingeführt und verriegelt wird, **dadurch gekennzeichnet, dass** die Verbindungs- und Verriegelungselemente einen Endstück (3) mit Querschnitt umfassen Auf den Schaft (11) aufgesteckte Quaderstange, die flexible Rippen (31) trägt, die mit sich radial erstreckenden Nasen (22) an der Innenwand des Kanals (21) der Platine (2) zusammenwirken, um das reversible Einrasten des Schaftes (11) zu gewährleisten.

2. Vorrichtung nach Anspruch 1, **dadurch gekennzeichnet, dass** die Wand des Kanals (21) einen parallelepipedischen inneren Querschnitt aufweist, durch den Öffnungen (20) zur Aufnahme der Rippen (31) nach dem Einrasten vorgesehen sind.

3. Vorrichtung nach einem der vorhergehenden Ansprüche, **dadurch gekennzeichnet, dass** die Stange (11) an ihrem Ende eine Schraubenfeder (12) und eine Mutter (13) trägt, die zum Verkeilen des Ansatzes (3) in der Leitung (21) bestimmt sind.

4. Vorrichtung nach einem der vorhergehenden Ansprüche, **dadurch gekennzeichnet, dass** der Ansatz (3) einen Kragen (32) umfasst, der dazu bestimmt ist, in Kontakt mit der Innenwand des Kanals (21) beim Einführen des Schaftes (11) zu gleiten.

5. Vorrichtung nach dem vorhergehenden Anspruch, **dadurch gekennzeichnet, dass** sich der Kragen (32) radial über den Ansatz (3) zwischen seinem vorderen Ende und den Flügeln (31) erstreckt.

6. Vorrichtung nach Anspruch 4 oder 5, **dadurch gekennzeichnet, dass** der Kragen (32) zumindest teilweise aus einem elastomeren Material hergestellt ist, das beim Einrasten eine dämpfende Wirkung gewährleistet.

7. Vorrichtung nach einem der vorhergehenden Ansprüche, **dadurch gekennzeichnet, dass** das hintere Ende des Ansatzes (3) Führungszapfen (33) trägt, die verschiebbar in Nuten (23) mit komplementärem Profil an der Innenwand des hinteren Endes des Kanals (21) angeordnet sind.

8. Verfahren zur Montage eines Smartphone-Trägers auf einem Armaturenbrett eines Kraftfahrzeugs mittels der Vorrichtung nach einem der vorhergehenden Ansprüche, **dadurch gekennzeichnet, dass** man die Platine (2) im Armaturenbrett (P) vorinstalliert und sie mit Auskleidungselementen versehen, parallel dazu das genannte Ansatzstück (3) auf den Schaft (11) der Konsole (1) steckt und es dann in die Leitung (21) der Platine einführt, bis am Ende des Weges seine Verriegelung durch Einrasten erfolgt.

9. Verfahren zur Demontage eines auf einem Armaturenbrett (P) eines Kraftfahrzeugs montierten Smartphone-Trägers nach dem Verfahren gemäß dem vorhergehenden Anspruch, **dadurch gekennzeichnet, dass** man wenigstens eines der Packungselemente abtrennt, um auf die Platine (2) zuzugreifen, und dann die Flügel (31) des Ansatzes (3) drückt, um die Stange (11) zu entriegeln und sie durch Ziehen an der Konsole (1) aus dem Rohr (21) zu ziehen.

10. Kraftfahrzeug mit einer Vorrichtung zur Montage eines Smartphones nach einem der Ansprüche 1 bis 7.

## Claims

1. Device for assembly line a smartphone support on a motor vehicle dashboard (P), said support comprising, on the one hand, a console (1) whose front wall (1a) defines a housing for the smartphone and whose back wall (1b) gates a rod (11) provided with connecting and locking items and, on the other hand, a plate (2) which is integrated into the dashboard and has a conduit (21) into which said rod is inserted and locked, wherein said connecting and locking items comprise a connector (3) of parallelepipedal section fitted onto said rod (11) and carrying flexible fins (31) cooperating with lugs (22) extending radially on the inner wall of the conduit (21) of the plate (2) the reversible snap-fastening of the rod (11).

2. Device according to claim 1, **characterised in that** the wall of said duct (21) has an internal parallelepipedal section through which orifices (20) are formed for the fins (31) after snap-fastening.

3. Device according to one of the previous claims, wherein said rod (11) gates, at its end, a helical spring (12) and a nut (13) intended for the calage of the end piece (3) in the conduit (21).

4. Device according to one of the previous claims, wherein said end piece (3) comprises a collar (32) intended to slide in contact with the internal wall of the conduit (21) during the introduction of the rod (11).

5. Device according to claim 3, wherein said collar (32) extends radially over the endpiece (3) between its front end and the fins (31).

6. Device according to Claim 4 or 5, **characterised in that** said flange (32) is realised, at least partially, with an elastomer material ensuring a damping effect during snap-fastening.

7. Device according to one of the previous claims, wherein the rear end of the end piece (3) gates the guide tenons (33) housed in a sliding manner in grooves (23) of complementary profile provided on the inner wall of the rear end of the conduit (21).

8. Method of assembly line of a smartphone support on a motor vehicle dashboard by means of the device according to one of the previous claims, wherein the plate (2) is installed beforehand in the dashboard (P) and is provided with trim items, in parallel said end piece (3) is fitted onto the rod (11) of the console (1) and then introduced into the conduit (21) of the plate until it is locked by snap-fastening at the end of its travel.

9. Method for dismantling a smartphone support mounted on a motor vehicle dashboard (P) via the method according to claim 3, wherein at least one of the trim items is separated to gain access to the plate (2) and then the fins (31) of the endpiece (3) are pressed to unlock the rod (11) and extract it from the conduit (21) by pulling on the console (1).

10. Motor vehicle equipped with an assembly line device of a smartphone according to one of claims 1 to 7.
